# EUROPÄISCHE PATENTANMELDUNG

(11) **EP 1 060 881 A1**
(43) Veröffentlichungstag der Anmeldung: **20.12.2000**
(21) Anmeldenummer: 00110199.7
(22) Anmeldetag: 16.05.2000
(51) Int. Cl.: B41F 13/20

(54) **Vorrichtung und Verfahren zum Schmieren und Kühlen eines Wälzlagers**

(30) Priorität: 14.06.1999 US 333169
(71) Anmelder: Heidelberger Druckmaschinen Aktiengesellschaft, 69115 Heidelberg (DE)
(72) Erfinder: LaPine, Eric Michael, Northwood, NH 03261 (US); Douillard, Gerald Roger, Dover, NH 03820 (US); Lemelin, Michael Robert, Dover, NH 03820 (US)

(57) **Zusammenfassung**

Eine Vorrichtung zum Schmieren und Kühlen eines Lagers, insbesondere eines Wälzlagers (4), in einer Druckmaschine, wobei das Lager (4) zur Lagerung einer Druckmaschinenwalze an einem Ende der Walze angeordnet ist, und die Walze (3) mit ihrem anderen Ende in einem einen Ölvorrat enthaltenden Getriebekasten (15) drehbar gelagert ist, zeichnet sich dadurch aus, dass ein Ölkreislauf vorgesehen ist, der den Getriebekasten (15) strömungsmäßig mit dem Lager (4) verbindet und durch den das Öl zum Schmieren und Kühlen des Lagers (4) vom Getriebekasten (15) zum Lager (4) gefördert wird.

## Beschreibung

Die vorliegende Erfindung betrifft eine Vorrichtung und ein Verfahren zum Schmieren und Kühlen eines Lagers, insbesondere eines Wälzlagers, in einer Druckmaschine, gemäß dem Oberbegriff von Anspruch 1 und 12.

Druckmaschinen umfassen in der Regel eine Vielzahl von Walzen, die Walzenspalte bilden, durch die die zu bedruckenden Produkte, z. B. eine Materialbahn, insbesondere eine Papierbahn, oder einzelne Bogen aus Papier oder Pappe, geführt werden.

Die Walzen in der Druckmaschine sind in Walzenlagern gelagert, welche mit Schmierfett aus einem Schmierfettbehälter geschmiert werden. In der Regel ist eine Pumpe vorgesehen, die das Schmierfett in Intervallen vom Vorratsbehälter durch verschiedene Leitungen zum gewünschten Ort an den Lagern pumpt.

Die US 5,484,212 betrifft ein Verfahren zum Schmieren eines Wälzlagers in einer Druckmaschine, in dem das von einem Schmierfettbehälter in das Lager gepumpte Schmierfett durch einen Luftstrom verteilt wird. Ein Druckzylinder ist in einem Wälzlager gelagert, das eine Anzahl von Rollelementen aufweist, die einander gegenüberliegende Lagerlaufflächen stützen. Zusätzlich zur Verteilung von Schmierfett auf den Rollelementen des Wälzlagers wird eine geringe Menge Schmierfett axial in Richtung des Zylinderkörpers gespritzt, wo es eine Versiegelung zwischen dem Lagergehäuse und dem Zylinder aus Schmierfett bildet.

Je nach Geschwindigkeit des Druckwerks und/oder des zugeordneten Produktbearbeitungssystems drehen sich die Walzen mit entsprechend hoher Geschwindigkeit. Die Gummituchzylinder und Plattenzylinder in Offsetdruckmaschinen drehen sich z. B. mit Geschwindigkeiten von über 1100 Umdrehungen pro Minute. Schmierfett ist ein wenig geeignetes Mittel zum Ableiten der in den Wälzlagern entstehenden Reibungswärme. Es wird deshalb vielfach mittels an den Lagergehäusen angeordneter Kühlplatten ein Wärmeaustausch bewirkt, wobei die Kühlplatten z. B. über einen Wärmeaustausch mit Kühlwasser gekühlt werden.

Die Kühlwasserzufuhr ist relativ kompliziert und kostenintensiv, da für einen optimalen Wärmeaustausch ein störungsfreier Zufluss eines geeignet temperierten Kühlwassers gewährleistet sein muss. Ferner raten Lagerhersteller von Schmierfett als Schmiermittel bei hohen Geschwindigkeiten ab und empfehlen stattdessen die Verwendung von Öl.

Demgemäß ist es eine Aufgabe der vorliegenden Erfindung, eine Vorrichtung und ein Verfahren zum Schmieren und Kühlen eines Lagers zu schaffen, durch das die zuvor erwähnten Nachteile bekannter Vorrichtungen und Verfahren dieser Art beseitigt werden, durch das insbesondere eine externe Kühlmittelquelle für die Lager unnötig wird und das ein Schmieren mit Öl anstelle von Schmierfett ermöglicht.

Diese Aufgabe wird erfindungsgemäß durch die Merkmale von Anspruch 1 und 9 gelöst.

Weitere Merkmale der Erfindung ergeben sich aus den Unteransprüchen.

Eine erfindungsgemäße Vorrichtung zum Schmieren und Kühlen eines Lagers, insbesondere eines Wälzlagers, in einer Druckmaschine, wobei das Lager zur Lagerung einer Druckmaschinenwalze an einem Ende der Walze angeordnet ist und die Walze mit ihrem anderen Ende in einem einen Ölvorrat enthaltenden Getriebekasten drehbar gelagert ist, zeichnet sich dadurch aus, dass ein Ölkreislauf vorgesehen ist, der den Getriebekasten strömungsmäßig mit dem Lager verbindet und durch den das Öl zum Schmieren und Kühlen des Lagers vom Getriebekasten zum Lager gefördert wird.

Gemäß einer weiteren Ausführungsform der vorliegenden Erfindung kann das Lager als ein Wälzlager ausgebildet sein, das ein Lagergehäuse umfasst, durch welches das Wälzlager so dicht umschlossen ist, dass im Wesentlichen kein Öl austreten kann.

Gemäß einer weiteren Ausführungsform der vorliegenden Erfindung kann der Ölkreislauf als ein geschlossener Kreislauf ausgebildet sein, durch den das Öl vom Getriebekasten zum Lagergehäuse und zurück zum Getriebekasten fließt.

Der Ölkreislauf kann vorzugsweise eine Ölpumpe umfassen, die das Öl vom Getriebekasten durch das Lager und zurück zum Getriebekasten pumpt.

Ferner kann das Lagergehäuse vorzugsweise eine Einlauf- und eine Ablauföffnung umfassen, und der Ölkreislauf kann vorzugsweise eine Zuführleitung, die den Getriebekasten mit der Einlauföffnung verbindet, sowie eine Ablaufleitung umfassen, welche die Ablauföffnung mit dem Getriebekasten verbindet.

Zusätzlich dazu können weiterhin vorzugsweise eine erste und eine zweite tropffreie Schnelltrennkupplung vorgesehen sein, durch welche die Zuführleitung trennbar mit der Einlauföffnung und die Ablaufleitung trennbar mit der Ablauföffnung verbunden ist.

Alternativ können die Einlauf- und die Ablauföffnung als ein koaxiales Zweiwegeventil und die Zuführleitung und die Ablaufleitung als eine einzige Zweiwegeleitung ausgebildet sein, die eine tropffreie Zweiwege-Schnelltrennkupplung umfasst, durch die die Zweiwegeleitung trennbar mit dem Zweiwegeventil verbunden ist.

Das Lagergehäuse kann ferner vorzugsweise eine Abdeckplatte umfassen, die im Wesentlichen senkrecht zu der Drehachse der Druckmaschinenwalze verläuft, wobei das Zweiwegeventil vorzugsweise im Wesentlichen koaxial zur Drehachse der Walze an der Abdeckplatte angeordnet ist.

Das erfindungsgemäße Verfahren zum Schmieren und Kühlen eines Lagers, insbesondere eines Wälzlagers, in einer Druckmaschine, wobei das Lager zur Lagerung einer Druckmaschinenwalze an einem Ende der Walze angeordnet ist, und die Walze mit ihrem anderen Ende in einem einen Ölvorrat enthaltenden Getriebekasten drehbar gelagert ist, zeichnet sich durch die folgenden Schritte aus:
- Bereitstellen einer Schnelltrennkupplung für einen Ölkreislauf zwischen dem Getriebekasten und dem Lagergehäuse und strömungsmäßiges Verbinden des Getriebekastens mit dem Lagergehäuse; und
- Pumpen des in dem Getriebekasten bevorrateten Öls in das Lagergehäuse zum Schmieren und Kühlen des Lagers während des Antreibens der Walze durch den Getriebekasten, und Ableiten des Öls von dem Lagergehäuse zurück zum Getriebekasten.

Die Merkmale der vorliegenden Erfindung werden in der folgenden Beschreibung bevorzugter Ausführungsbeispiele in Zusammenhang mit den beigefügten, nachfolgend aufgeführten Zeichnungen näher erläutert.

Es zeigen:
- Fig. 1: eine schematische Teilansicht eines Wälzlagers in einer Druckmaschine mit einer ersten Ausführungsform der erfindungsgemäßen Vorrichtung;
- Fig. 2: eine ähnliche Ansicht einer zweiten Ausführungsform der erfindungsgemäßen Vorrichtung; und
- Fig. 3: eine Schnittansicht entlang der Linie III-III in Fig. 2.

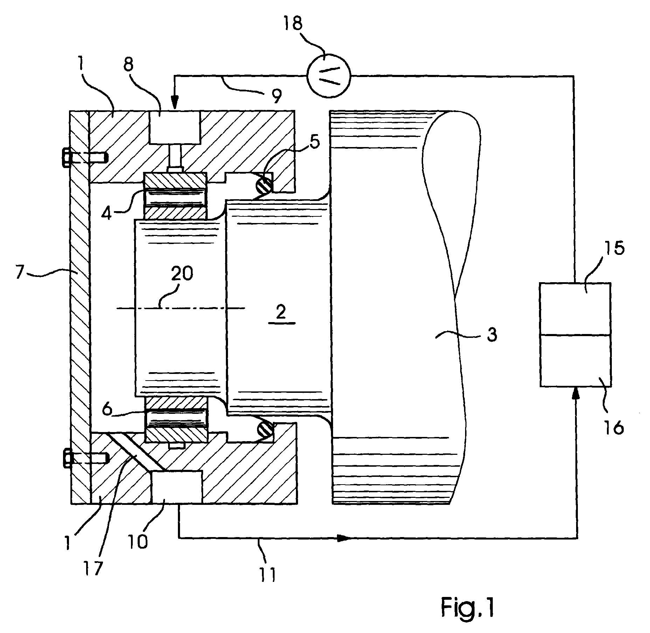

In Fig. 1 ist ein Lagergehäuse 1 gezeigt, in dem ein Zylinderzapfen 2 einer Druckmaschinenwalze 3 drehbar gelagert ist. Die Druckmaschinenwalze 3 kann z. B. als ein Gummituchzylinder, Plattenzylinder oder ähnlicher Zylinder ausgebildet sein, der sich mit einer so hohen Drehgeschwindigkeit dreht, dass ein Schmieren mit Öl von Vorteil ist.

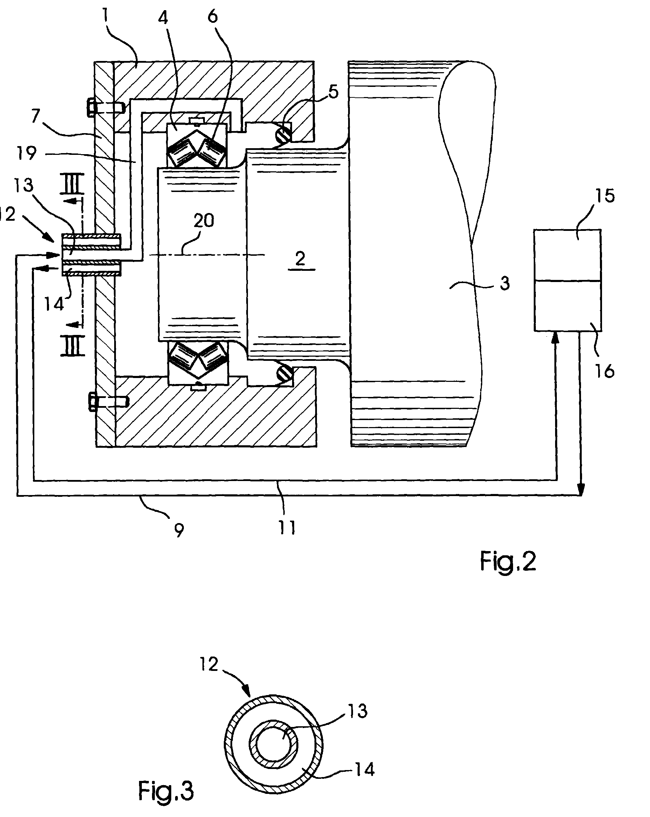

Der Walzenzapfen 2 umfasst einen in einem Wälzlager 4 gelagerten Abschnitt mit geringerem Durchmesser und einen Abschnitt mit größerem Durchmesser, an dem eine Dichtung 5 angeordnet ist, um das Austreten von Öl zu verhindern. Das in Fig. 1 gezeigte Wälzlager 4 ist als ein Lager mit einer einzigen Lauffläche für Rollelemente 6 ausgebildet. Gemäß der bevorzugten Ausführungsform umfasst das Wälzlager 4 zwei parallele, abgeschrägte Laufflächen. Wie in Fig. 2 schematisch gezeigt ist, rollen die Rollelemente 6 an zwei aneinandergrenzenden Führungsflächen ab und drehen sich um Drehachsen, die relativ zueinander leicht (konvex vom Zapfen 2 weg) geneigt sind. Derartige Wälzlager sind handelsüblich und beispielsweise bei der Torrington Bearing Company erhältlich.

Das Lagergehäuse 1 ist an der der Walze 3 abgewandten Seite durch eine Abdeckplatte 7 geschlossen. Dadurch entsteht ein im Wesentlichen abgedichteter Raum zwischen den Wänden des Lagergehäuses 1, dem Zylinderzapfen 2, der Dichtung 5 des Lagergehäuses und der Abdeckplatte 7 des Lagergehäuses. Auf diese Weise wird das Wälzlager 4 von dem im abgedichteten Raum vorhandenen Öl geschmiert.

Durch eine Schnelltrennkupplung 8, die über eine Ölzuführleitung 9 mit einer Ölwanne 16 eines auf der Antriebsseite, d. h. der Getriebeseite der Walze 3 angeordneten Getriebekastens 15 verbunden ist, wird Öl in den abgedichteten Raum eingespritzt. Auf diese Weise wird das Wälzlager mit Öl aus der an der Antriebsseite angeordneten Ölwanne 16 geschmiert und gekühlt. Die separate Ölleitung 9 ist mit jedem Lagergehäuse des Systems durch dichte, insbesondere tropffreie Schnelltrennkupplungen verbunden, durch die verhindert wird, dass Öl aus dem System austritt oder Luft in das System einströmt. Die Schnelltrennkupplungen werden geschlossen, wenn das Lagergehäuse in dem jeweiligen Lagerkasten befestigt wird. Das Öl fließt an der Schnelltrennkupplung 8 ein, fließt auf das Wälzlager 4 und durch eine zu einer Schnelltrennkupplung 10 führenden Öffnung 17 wieder aus dem Lagergehäuse 1 ab. Von dort zirkuliert das Öl durch eine Ablaufleitung 11 des Ölkreislaufs zurück zur Ölwanne 16 im Getriebekasten 15.

In der Zuführleitung 9 ist eine schematisch gezeigte Pumpe 18 vorgesehen. Das Öl kann auch mittels einer herkömmlichen, im Getriebekasten 15 angeordneten Ölpumpe gepumpt werden. werden.

In der in Fig. 2 und 3 gezeigten alternativen Ausführungsform ist anstelle der zwei getrennten Schnelltrennkupplungen 8, 10 eine Zweiwege-Schnelltrennkupplung 12 vorgesehen. Die Zweiwege-Schnelltrennkupplung 12 umfasst ein mittleres Einlassventil 13, durch das das Schmiermittel in das Lagergehäuse 1 einläuft, und ein das Einlassventil 13 umgebendes Austrittsventil 14. Das durch das Einlassventil 13 einlaufende Öl wird über eine Einsprizleitung 19 an die gegenüberliegende Seite des Wälzlagers 4 geleitet. Von dort aus verteilt es sich von allein um das Lager 4, schmiert und kühlt das Lager und fließt durch das Austrittsventil 14 ab. Die mit den Ventilen 13, 14 verbundene Zweiwegeleitung ist mit der Ölwanne 16 in dem Getriebekasten 15 verbunden. Es ist ebenfalls denkbar, dass die Einsprizleitung 19 mit der zentralen Ölverbindung des Wälzlagers 4 verbunden ist.

Das Zweiwegeventil 12 ist ein koaxiales Ventil. Die diesem Ventil zugeordnete Schnelltrennkupplung führt in eine koaxiale Zweiwegeleitung, bei der die Zuführleitung 9 beispielsweise koaxial innerhalb der größeren Ablaufleitung 11 angeordnet ist. Die Druckmaschinenwalze 3 dreht sich um eine Achse 20, zu der das Zweiwegeventil 12 vorzugsweise koaxial angeordnet ist. Die Abdeckplatte 7 ist vorzugsweise orthogonal zu der Drehachse 20 angeordnet.

Einer der großen Vorteile der Zweiwege-Schnelltrennkupplung besteht darin, dass sie an der Vorderseite des Lagergehäuses 1 angeordnet und damit gut zugänglich ist. Dadurch, dass das Ventil 13/14 mittig auf der Abdeckplatte 7 des Lagergehäuses 1 angeordnet ist, entfällt die Notwendigkeit einer exakten Positionierung des Gehäuses bezüglich des Gehäusekastens.

### Liste der Bezugszeichen

- 1: Lagergehäuse
- 2: Zylinderzapfen
- 3: Druckmaschinenwalze
- 4: Wälzlager
- 5: Dichtung
- 6: Rollelemente
- 7: Abdeckplatte
- 8: Schnelltrennkupplung
- 9: Zuführleitung
- 10: Schnelltrennkupplung
- 11: Ablaufleitung
- 12: Zweiwege-Schnelltrennkupplung
- 13: mittleres Einlassventil
- 14: Austrittsventil
- 15: Getriebekasten
- 16: Ölwanne
- 17: Ablauföffnung
- 18: Pumpe
- 19: Einspritzleitung
- 20: Achse der Druckmaschinenwalze

## Patentansprüche

1. Vorrichtung zum Schmieren und Kühlen eines Lagers, insbesondere eines Wälzlagers (4), in einer Druckmaschine, wobei das Lager (4) zur Lagerung einer Druckmaschinenwalze (3) an einem Ende der Walze (3) angeordnet ist, und die Walze (3) mit ihrem anderen Ende in einem einen Ölvorrat enthaltenden Getriebekasten (15) drehbar gelagert ist,
**dadurch gekennzeichnet,**
dass ein Ölkreislauf vorgesehen ist, der den Getriebekasten (15) strömungsmäßig mit dem Lager (4) verbindet und durch den das Öl zum Schmieren und Kühlen des Lagers (4) vom Getriebekasten (15) zum Lager (4) gefördert wird.

2. Vorrichtung nach Anspruch 1,
**dadurch gekennzeichnet,**
dass weiterhin ein das Lager (4) im Wesentlichen dicht umschließendes Lagergehäuse (1) vorgesehen ist, in welches das Öl aus dem Getriebekasten (15) zugeführt wird.

3. Vorrichtung nach Anspruch 2,
**dadurch gekennzeichnet,**
dass der Ölkreislauf als ein geschlossener Kreislauf ausgebildet ist, der von dem Getriebekasten (15) zum Lagergehäuse (1) und vom Lagergehäuse (1) zurück zum Getriebekasten (15) führt.

4. Vorrichtung nach einem der vorhergehenden Ansprüche,
**dadurch gekennzeichnet,**
dass der Ölkreislauf ferner eine Ölpumpe (18) umfasst, die das Öl durch den Ölkreislauf fördert.

5. Vorrichtung nach einem der vorhergehenden Ansprüche,
**dadurch gekennzeichnet,**
dass der Getriebekasten (15) eine Ölwanne (16) umfasst, die den Olvorrat enthält.

6. Vorrichtung nach einem der Ansprüche 2 bis 5,
**dadurch gekennzeichnet,**
dass das Lagergehäuse (1) eine Einlauföffnung und eine Ablauföffnung (17) umfasst, und dass
der Ölkreislauf eine den Getriebekasten (15) mit der Einlauföffnung verbindende Zufuhrleitung (9) und eine die Ablauföffnung (17) mit dem Getriebekasten (15) verbindende Ablaufleitung (11) umfasst.

7. Vorrichtung nach Anspruch 6,
**dadurch gekennzeichnet,**
dass ferner eine erste Schnelltrennkupplung (8) vorgesehen ist, die die Zuführleitung (9) trennbar mit der Einlauföffnung verbindet, und
dass eine zweite Schnelltrennkupplung (10) vorgesehen ist, die die Ablaufleitung (11) trennbar mit der Ablauföffnung (17) verbindet.

8. Vorrichtung nach Anspruch 6,
**dadurch gekennzeichnet,**
dass die Einlauföffnung und die Ablauföffnung (17) als ein koaxiales Zweiwegeventil (13/14) ausgebildet sind,
dass die Zuführleitung (9) und die Ablaufleitung (11) als eine Zweiwegeleitung ausgebildet sind, und
dass eine Zweiwege-Schnelltrennkupplung (12) vorgesehen ist, durch die die Zweiwegeleitung (9/11) und das Zweiwegeventil (13/14) trennbar miteinander verbindbar sind.

9. Vorrichtung nach Anspruch 8,
**dadurch gekennzeichnet,**
dass das Lagergehäuse (1) eine Abdeckplatte (7) umfasst, die im Wesentlichen senkrecht zur Drehachse (20) der Walze (3) verläuft, und
dass das Zweiwegeventil (13/14) im Wesentlichen koaxial zur Drehachse (20) der Walze (3) an der Abdeckplatte (7) angeordnet ist.

10. Vorrichtung nach Anspruch 1,
**dadurch gekennzeichnet,**
dass das Getriebe im Getriebekasten (15) mit Öl geschmiert wird, wobei das Öl am Boden des Getriebekastens (15) gesammelt wird und über eine Zuführleitung (9) eines geschlossenen Ölkreislaufs unter Einsatz einer dem Ölkreislauf zugeordneten Ölpumpe (18) zum dem Getriebekasten (15) gegenüberliegenden Lager (4) der Druckwalze (3), welches von einem Lagergehäuse (1) im Wesentlichen dicht umschlossen ist, gefördert wird, und dass das Lager (4) mit diesem Öl geschmiert und gekühlt wird, wobei das Öl am Boden des Lagergehäuses (1) gesammelt wird und über eine Abführleitung (11) des geschlossenen Ölkreislaufs unter Einsatz der Ölpumpe (18) zum Getriebekasten (15) zurückgefördert wird.

11. Druckmaschine,
**gekennzeichnet durch**
eine Vorrichtung zum Schmieren und Kühlen eines Lagers nach einem der Ansprüche 1 bis 10.

12. Verfahren zum Schmieren und Kühlen eines Lagers (4), insbesondere eines Wälzlagers (4), in einer Druckmaschine, wobei das Lager (4) zur Lagerung einer Druckmaschinenwalze (3) an einem Ende der Walze (3) angeordnet ist, und die Walze (3) an ihrem anderen Ende in einem einen Ölvorrat enthaltenden Getriebekasten (15) drehbar gelagert ist,
**gekennzeichnet durch**
die folgenden Verfahrensschritte:
Bereitstellen einer Schnelltrennkupplung (8, 10, 12) für einen Ölkreislauf zwischen dem Getriebekasten (15) und dem Lagergehäuse (1) und strömungsmäßiges Verbinden des Getriebekastens (15) mit dem Lagergehäuse (1); und
Pumpen des in dem Getriebekasten (15) bevorrateten Öls in das Lagergehäuse (1) zum Schmieren und Kühlen des Lagers (4) während des Antreibens der Walze (3) im Getriebekasten (15), und Ableiten des Öls von dem Lagergehäuse (1) zurück zum Getriebekasten.
